(19) Europäisches Patentamt
European Patent Office
Office européen des brevets

(11) **EP 4 534 172 A1**

(12) **EUROPEAN PATENT APPLICATION**
published in accordance with Art. 153(4) EPC

(43) Date of publication:
**09.04.2025 Bulletin 2025/15**

(51) International Patent Classification (IPC):
**B01D 43/00** (2006.01)     **B01J 19/10** (2006.01)
**G01N 37/00** (2006.01)

(21) Application number: **23815889.3**

(52) Cooperative Patent Classification (CPC):
**B01D 43/00; B01J 19/10; G01N 37/00**

(22) Date of filing: **24.05.2023**

(86) International application number:
**PCT/JP2023/019243**

(87) International publication number:
**WO 2023/234130 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.05.2022 JP 2022087350**

(71) Applicant: **SHINSHU UNIVERSITY**
**Matsumoto City, Nagano, 390-8621 (JP)**

(72) Inventor: **AKIYAMA Yoshitake**
**Ueda City, Nagano 386-8567 (JP)**

(74) Representative: **K&L Gates LLP**
**Karolinen Karree**
**Karlstraße 12**
**80333 München (DE)**

(54) **PARTICLE TWO-DIMENSIONAL ACOUSTIC FOCUSING DEVICE, AND ACOUSTIC CONCENTRATION DEVICE USING SAME**

(57)     Provided are a particle two-dimensional acoustic focusing device that can efficiently focus and concentrate particles present in liquid flowing in a channel by using the acoustic effect of ultrasonic waves while having a simple configuration, and an acoustic concentration device using the particle two-dimensional acoustic focusing device. This particle two-dimensional acoustic focusing device is configured so as to focus particles contained in liquid flowing in a channel to the center part of the cross-section of the channel by using ultrasonic waves and comprises: a rectangular channel 10 having a substantially rectangular cross-sectional shape when broken orthogonally to the extension direction of the channel; and a single ultrasonic wave generator 20 that simultaneously irradiates the interior of the rectangular channel 10 with a first ultrasonic wave and a second ultrasonic wave in a composite state, the first ultrasonic wave being generated so that the length of a long side a of the rectangle of the rectangular channel 10 is substantially equivalent to the length of a half wavelength, the second ultrasonic wave being generated so that the length of a short side b of the rectangle of the rectangular channel 10 is substantially equivalent to the length of the half wavelength.

[FIG. 2]

EP 4 534 172 A1

**Description**

FIELD OF THE INVENTION

The present invention relates to a particle two-dimensional acoustic focusing device and an acoustic concentration device using the focusing device.

BACKGROUND TECHNOLOGY

For example, a bioparticle handling technology using ultrasonic irradiation pressure, in which particles suspended in liquid are arranged, oriented and concentrated by using ultrasonic waves, has been disclosed as a technology of acoustic-concentrating particles contained in liquid (see Non-patent Document 1). The principle of ultrasonic irradiation pressure applied to particle in standing waves will be explained. Firstly, when a standing wave of an ultrasonic wave is introduced into liquid, pressure amplitude of the standing wave is minimized at a node of acoustic pressure of the standing wave, and it is maximized at a loop thereof. On the other hand, displacement of a medium is maximized at the node of acoustic pressure, and it is minimized at the loop thereof. When introducing particles whose density and compressibility are different from the medium into an acoustic field, the particles try to move such that work of the particles caused by pressure vibration and medium vibration in the entire system is minimized. This force is the ultrasonic irradiation pressure (see description of Fig. 2 of the Non-patent Document 1).

To solve the environmental problems of plastics, the inventors of the present invention have disclosed applicability of an acoustic concentration technology applied to particles contained in liquid as means for enabling continuous collection and continuous analysis of microplastics (see Non-patent Document 2).

With respect to the environmental problems of plastics, sampling of microplastics have been conventionally performed by using a plankton net having mesh size of around 0.3 mm (300 $\mu$m). Therefore, microplastics whose size is smaller than the mesh size cannot be collected so that their actual conditions cannot be found. To collect finer microplastics, it is necessary to make a highly finer mesh, but the finer the mesh is made, the easier the mesh is closed. Microplastics collected by the mesh are respectively manually picked up by using tweezers, but it is difficult to collect finer ones. Thus, a technology of performing continuous collection and continuous analysis of microplastic has been required.

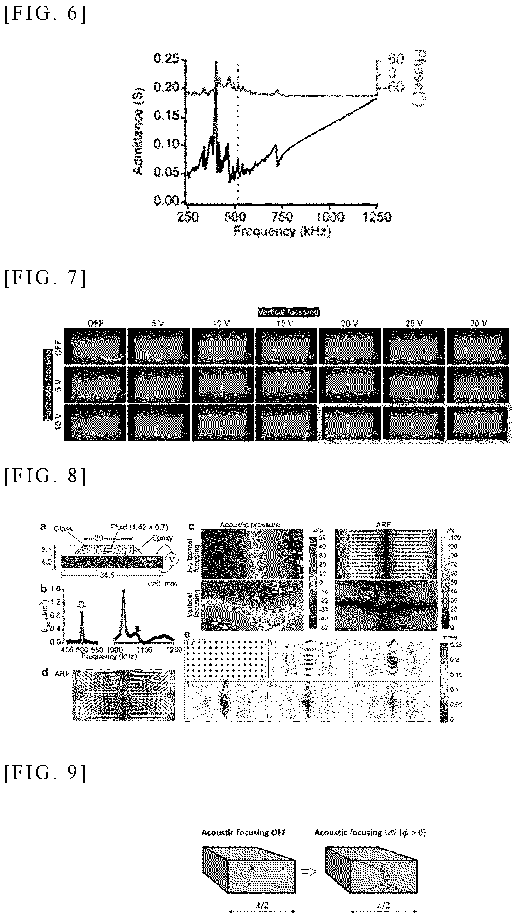

Conventionally, a technology of horizontal focusing performed by using one-dimensional (1D) standing waves has been known and used in an acoustic microparticle focusing device capable of focusing particles in liquid flowing in a channel (see Fig. 9). Note that, Fig. 9 shows an OFF-state of the acoustic focusing, an ON-state thereof and a state of changing from the-OFF state. In this system, standing waves having a half wavelength in a transverse direction are generated in a microchannel, nodes are formed on a vertical center line, and microparticles are focused on the nodes. Note that, research results disclosed in the Non-patent Document 2 are obtained by using the above-described one-dimension focusing.

In case of using two-dimensional focusing in the conventional acoustic microparticle focusing device, a square channel is used as the easiest method. In this device, resonant frequencies in the horizontal direction and in the vertical direction are coincident, so that two-dimensional focusing can be achieved in a single ultrasonic generator without using additional devices and changing design. Further, achieving two-dimensional focusing in a circular channel has been reported.

On the other hand, in case of using two-dimensional focusing, two-dimensional focusing has been generally performed in a rectangular channel, and two vibration systems having different frequencies (see Patent Document 1) are generally required. One frequency is used for horizontal focusing, and it is selected such that a half of wavelength is equivalent to a microchannel width. Another frequency is used for vertical focusing, and it is selected such that a half of wavelength is equivalent to a the microchannel depth. Two piezoelectric transducers (PZTs), two signal generators and two high-frequency power amplifiers are required for the two vibration systems, so the entire system must be complex, and a production cost will be double in comparison with the vibration system of the one-dimension focusing. Further, it is necessary to attach two PZTs, which have different resonant frequencies and which correspond to the width and the depth, to a microfluidic device, so that design of the microfluidic device is limited.

PRIOR ART DOCUMENT

PATENT LITERATURE

[Patent Document 1] Japanese Laid-open Patent Publication No. 6-241977 (a paragraph [0023])
[Non-patent Document 1] Kenji Yasuda "Bioparticle handling technology using ultrasonic wave irradiation", Applied Physics, Volume 67 No. 3 (1998), Page 323-326

[Non-patent Document 2] Yoshitake Akiyama, Taketoshi Egawa, Kiyoshi Koyama, Hiroshi Moriwaki "Acoustic focusing of microplastics in microchannels: A promising continuous collection approach" Sensors and Actuators B: Chemical online version (November 10, 2019)

## SUMMARY OF THE INVENTION

## PROBLEMS TO BE SOLVED BY THE INVENTION

Problems of the conventional particle two-dimensional acoustic focusing device and the conventional acoustic concentration device using the focusing device will be explained. Firstly, the acoustic focusing is widely used for collecting microparticles in the channel, but the conventional one-dimension focusing is greatly affected, by disturbance in an acoustic field, in a branched part, so that concentration factor is limited to around 10. To improve the concentration factor, the two-dimensional focusing was proposed, and it was reported that the concentration factor was increased to around 60. However, in case of using a general rectangular channel, two independent vibration systems are required for the conventional two-dimensional focusing, the system must be complex and a production cost must be increased, so this device has been less employed.

An object of the present invention is to provide a particle two-dimensional acoustic focusing device, which uses an acoustic effect of ultrasonic waves and which is capable of efficiently collecting and concentrating particles contained in liquid flowing in a channel with a simple configuration, and an acoustic concentration device using the focusing device.

## MEANS FOR SOLVING THE PROBLEMS

To achieve the object, the present invention has following structures.

The particle two-dimensional acoustic focusing device of an embodiment of the present invention is configured so as to focus particles contained in liquid flowing in a channel to the center part of the cross-section of the channel by using ultrasonic waves and comprises: a rectangular channel having a substantially rectangular cross-sectional shape when broken orthogonally to the extension direction of the channel; and a single ultrasonic wave generator that simultaneously irradiates the interior of the rectangular channel with a first ultrasonic wave and a second ultrasonic wave in a composite state, the first ultrasonic wave being generated so that the length of a long side a of the rectangle of the rectangular channel is substantially equivalent to the length of a half wavelength, the second ultrasonic wave being generated so that the length of a short side b of the rectangle of the rectangular channel is substantially equivalent to the length of the half wavelength.

In an embodiment of the particle two-dimensional acoustic focusing device, the ultrasonic wave generator includes signal adjusting means capable of adjusting composite rate and magnitudes of two signals having different frequencies for generating the first ultrasonic wave and the second ultrasonic wave.

In an embodiment of the particle two-dimensional acoustic focusing device, the ultrasonic wave generator comprises: a signal generator for generating the two signals having different frequencies; and a piezoelectric element for generating the ultrasonic waves by receiving the signals from the signal generator.

In an embodiment of the particle two-dimensional acoustic focusing device, at least the rectangular channel part of the channel, which is irradiated with the first ultrasonic wave and the second ultrasonic wave, is set in a state of standing such that the liquid flows in the vertical direction.

In an embodiment of the particle two-dimensional acoustic focusing device, an optical measuring device, whose measuring capability is affected by a depth of field, is provided at a position facing the rectangular channel.

An acoustic concentration device of an embodiment of the present invention comprises any one of the above-described particle two-dimensional acoustic focusing devices, and the channel is a trifurcated channel, which is constituted by one branched channel, the other branched channel, and a center branched channel for flowing particles focused to the center part of the rectangular channel by the particle two-dimensional acoustic focusing device, is formed on a downstream side of the rectangular channel.

In an embodiment of the acoustic concentration device, the trifurcated channel is formed by dividing the channel into three in a length direction of a long side of the rectangular channel.

In an embodiment of the acoustic concentration device, a plurality of the acoustic concentration devices using the particle two-dimensional acoustic focusing devices are serially connected in a flowing direction of the liquid containing the particles.

In an embodiment of the acoustic concentration device, a plurality of the acoustic concentration devices using the particle two-dimensional acoustic focusing devices are parallelly connected in a flowing direction of the liquid containing the particles.

EFFECT OF THE INVENTION

The particle two-dimensional acoustic focusing device of the present invention and the acoustic concentration device using the focusing device have an advantageous effect that particles in liquid flowing the channel can be efficiently focused and concentrated, by using an acoustic effect of ultrasonic waves, with a simple configuration.

BRIEF DESCRIPTION OF THE DRAWINGS

[Fig. 1] is a schematic sectional view of an embodiment of the particle two-dimensional acoustic focusing device relating to the present invention, which shows a cross-section in a direction perpendicular to an extending direction of a channel (a flowing direction of liquid).
[Fig. 2] includes explanation views of the embodiment of the acoustic concentration device, which uses the particle two-dimensional acoustic focusing device relating to the present invention and in which a plurality of trifurcated branch channels are serially connected. (a) A perspective view of an example of a channel and schematic illustrations of the trifurcated branch channel. (b) A perspective view of a microfluidic chip. (c) A perspective view of a piezoelectric vibrator on which the microfluidic chip is mounted.
[Fig. 3] shows graphs showing examples of relationships between "Sample output flow rate" and "Concentration factor" relating to the present invention and the one-dimensional focusing.
[Fig. 4] is an explanation perspective view of the acoustic concentration device using the particle two-dimensional acoustic focusing device relating to the present invention, in which a plurality of the trifurcated branch channels are parallelly connected.
[Fig. 5] includes explanation views of experimental setup of acoustic focusing of microparticles. (a) Schematic illustration of the fully set up microfluidic chip. The inset shows typical acoustic pressure fields with standing waves. (b) Design of the microfluidic chip with the rectangular microchannel. Acoustic focusing was evaluated by observing the area in front of the trifurcated branch with a confocal fluorescent microscope from the opposite side of the PZT.
[Fig. 6] shows graphs of electrical measurement of the PZT as a function of frequency. Some peaks were found around 500 kHz, while over 800 kHz no peaks were found and the admittance increased slightly. The dashed line marks 515 kHz.
[Fig. 7] includes reconstructed cross-sectional images of fluorescent microparticles excited at single and dual frequencies. The microparticles were observed in green fluorescent images and when overlaid on the microchannel red fluorescent images, the microparticles appeared as yellow (the bright areas in this figure, which is displayed in grayscale). Amplitudes for horizontal focusing are shown on the left of the images and those for vertical focusing are shown above them. The images of 2D focusing that were the clearest are surrounded by thick gray lines. The scale bar shows 500 $\mu$m.
[Fig. 8] includes explanation views of numerical simulations for acoustic focusing. (a) Schematic illustration of the 2D numerical model. (b) The average of acoustic energy density over the fluid domain as a function of frequency. White and black arrows show the frequencies adopted to the experiments for horizontal and vertical focusing, respectively. (c) Distributions of pressure and acoustic radiation force (ARF) for 1D focusing. The arrow length is proportional to the magnitude of ARF. (d) Overlaid distribution of ARF for 2D focusing represented in the same manner as (c). (e) Sequential images of particle movement during 10 s. In less than 5 s, most particles moved toward the vertical center line at velocities up to 0.25 mm/s.
[Fig. 9] includes schematic views of the conventional one-dimensional focusing, which show the OFF-state of the acoustic focusing, the ON-state thereof and the state of changing from the OFF-state.

EMBODIMENTS OF THE INVENTION

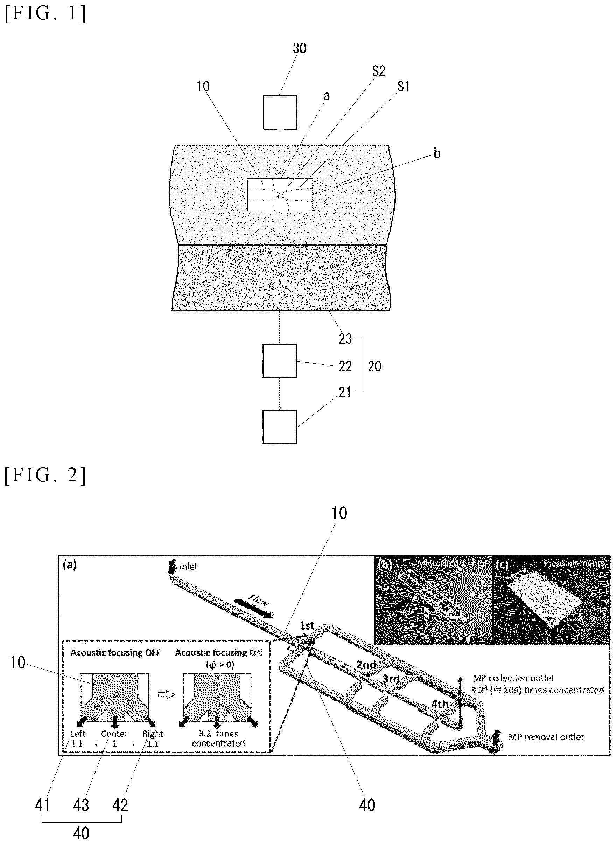

Embodiments of the particle two-dimensional acoustic focusing device of the present invention will now be described in detail with reference to the accompanying drawings (Figs. 1-8), The particle two-dimensional acoustic focusing device of the present invention is capable of focusing particles contained in liquid flowing in a channel to the center part of the cross-section of the channel by using ultrasonic waves.

In the particle two-dimensional acoustic focusing device of the present invention, as shown in Fig. 1, the device comprises: a rectangular channel 10 having a substantially rectangular cross-sectional shape when broken orthogonally to the extension direction of the channel (the flowing direction of the liquid); and a single ultrasonic wave generator 20 which simultaneously irradiates the interior of the rectangular channel 10 with a first ultrasonic wave and a second ultrasonic wave in a composite state, the first ultrasonic wave being generated so that the length of a long side a of the rectangle of the rectangular channel 10 is substantially equivalent to the length of a half wavelength, the second ultrasonic wave being generated so that the length of a short side b of the rectangle of the rectangular channel 10 is substantially equivalent to the length of the half wavelength.

In the particle two-dimensional acoustic focusing device of the present invention, as shown in Fig. 1, horizontal standing waves S1 having a half wavelength is generated by first ultrasonic waves, vertical standing waves S2 having a half wavelength is generated by second ultrasonic waves, so that two-dimensional acoustic focusing can be performed with the simple structure and particles contained in flowing liquid can be efficiently focused to the center part of the cross-section of the channel 10. Namely, the two-dimensional focusing can be realized by simultaneously actuating a single piezoelectric element (piezoelectric vibrator 23) at different two frequencies, so that the two-dimensional focusing can be realized with the single vibration system, complication of the system can be avoided and a production cost can be reduced.

In case that the ultrasonic wave generator 20 includes signal adjusting means capable of adjusting composite rate and magnitudes of two signals having different frequencies for generating the first ultrasonic wave and the second ultrasonic wave, and the ultrasonic generator is capable of corresponding to various conditions, e.g., sampling condition, and being reasonably adjusted to optimize the two-dimensional acoustic focusing. The signal adjusting means may be a signal generator capable of generating two signals having different frequencies, a high-frequency power amplifier 22 capable of respectively amplification-adjusting two electric signals having different frequencies, etc.

Further, in case that the ultrasonic wave generator 20 comprises: a signal generator 21 for generating the two signals having different frequencies; and a piezoelectric element 23 for generating the ultrasonic waves when receiving the signals from the signal generator 21, the signal generator 21 can be easily and reasonably constituted, and a production cost can be reduced.

Further, in the particle two-dimensional acoustic focusing device of the present invention, at least a part of the rectangular channel 10, which is irradiated with the first ultrasonic waves and the second ultrasonic waves, is set in a state of standing such that the liquid flows in the vertical direction. With this structure, when performing the two-dimensional acoustic focusing in the rectangular channel 10, particles contained in the liquid are less affected by gravity, so that the particles can be suitably focused to the center part of the rectangular channel 10.

In the particle two-dimensional acoustic focusing device of the present invention, as shown in Fig. 1, an optical measuring device 30, whose measuring capability is affected by a depth of field, is provided at a position facing the rectangular channel 10.

With this structure, the particles flowing in the rectangular channel 10 can be controlled to flow within an allowable range of the depth of field, in which the optical measuring device can focus, so that accuracy of measuring the particles, with the optical measuring device, can be made higher. For example, particle recognition and trace-measuring sizes of the particles performed by image processing and material identification by microscopic Raman can be more precisely performed.

As shown in Fig. 2, the acoustic concentration device of an embodiment comprises the above-described particle two-dimensional acoustic focusing device, and the channel is formed into a trifurcated channel 40, which is constituted by one branched channel 41, the other branched channel 42, and a center branched channel 43 for flowing particles focused to the center part of the rectangular channel 10 by the particle two-dimensional acoustic focusing device, is located on a downstream side of the rectangular channel 10.

By dividing the channel, in a length direction of the long side of the rectangular shape, into three so as to form the trifurcated channel 40, the three branched channels 41-43 can be suitably divided and easily branched by properly using the flat rectangular channel 10.

For example, the trifurcated channel 40 is constituted, as shown in Fig. 2, by the left branched channel (the one branched channel 41), the center branched channel 43 and the right branched channel (the other branched channel 42), whose flow ratio is designed as 1.1 : 1 : 1.1. With this structure, the microparticles (MP) in the liquid can be condensed 3.2 times. By connecting four stages in series as shown in Fig. 2, the concentrating action is repeated, so that the microparticles can be condensed around 100 times.

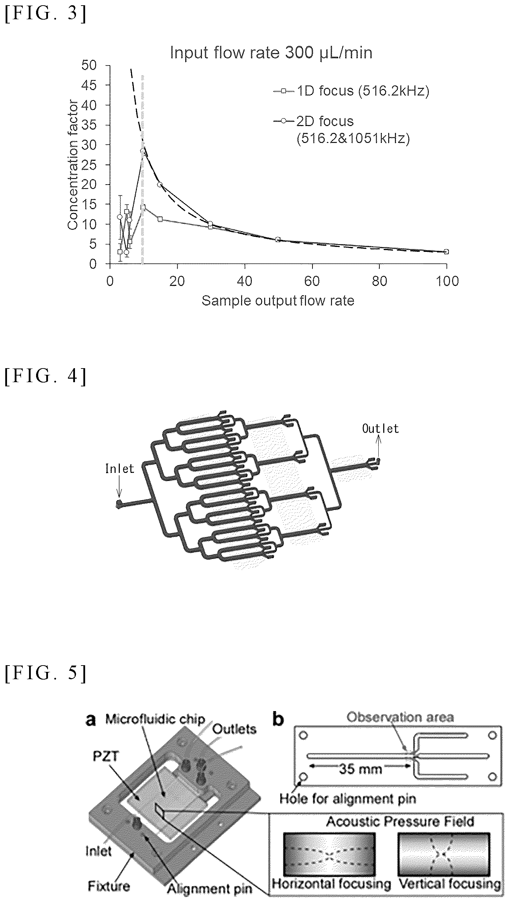

Here, a method for obtaining "Concentration factor" will be explained with reference to Fig. 3. Fig. 3 shows graphs showing examples of relationship between "Sample output flow rate" and "Concentration factor" relating to the present invention. Note that,

$$(\mathrm{concentration\ rate}) = (\mathrm{output\ flow\ rate}) / (\mathrm{input\ flow\ rate}),$$

and

(concentration factor) = (collection rate) $\times$ (concentration rate)

In the examples, the input flow rate was 300 μL/min., and an ultrasonic wave of 516.2 kHz for one-dimensional acoustic focusing and ultrasonic waves of 516.2 kHz and 1051 kHz were irradiated for two-dimensional acoustic focusing, so that a limit of the concentration rate of the one-dimensional acoustic focusing was around 10 times (the output flow rate was 30 μL/min.); a practical range of the concentration rate of the two-dimensional acoustic focusing was 30 times (the output flow rate was 10 μL/min.). Note that, when the concentration rate was 30 times (300 μL/min. / 10 μL/min.) in the two-dimensional acoustic focusing, collection rate was 90%, and the calculated concentration factor was 27.

Further, as shown in Fig. 2, a plurality of the acoustic concentration devices using the particle two-dimensional acoustic focusing devices are serially connected in a flowing direction of the liquid containing the particles, so that the concentration rate can be exponentially made higher.

Further, as shown in Fig. 4, a plurality of the acoustic concentration devices using the particle two-dimensional acoustic focusing devices are parallelly connected in a flowing direction of the liquid containing the particles, so that processing liquid flow can be increased.

Next, concrete examples (embodiments), in which the particle two-dimensional acoustic focusing is performed, in a rectangular microchannel, with a single transducer (piezoelectric vibration element) excited by two different frequencies, will be explained.

(SUMMARY)

The 2D focusing can drastically improve the efficiency of the particle enrichment systems, but it has not been widely used due to the complexity of the 2D focusing system. The conventional 2D focusing system needs two independent vibration systems operating at different frequencies. In contrast, the proposed method can perform 2D focusing by simply exciting the PZT at dual frequencies simultaneously. This is done using a single vibration system and inputting the pre-combined signals to a high-frequency power amplifier. The method can be easily applied to most conventional acoustic systems and will improve their efficiency.

In the embodiments, we propose a two-dimensional (2D) focusing method that performs horizontal and vertical focusing in a rectangular microchannel (flow path) using a single piezoelectric transducer (PZT) excited at two frequencies. In this proposed method, a single PZT is excited by combining signals of different frequencies in an appropriate ratio. According to this proposed method, 2D focusing can be achieved easily at low cost because it can be achieved with almost the same system as 1D focusing.

Conventional two-dimensional focusing in rectangular microchannels requires a complex system to excite two types of PZTs separately at their respective resonant frequencies. In this experiment, two-dimensional focusing was achieved with a single PZT by adjusting the amplitude ratio of horizontal focusing at the resonant frequency and vertical focusing at the non-resonant frequency. Numerical simulations also demonstrated that two-dimensional focusing is possible by superimposing excitations of two different frequencies at the same ratio as in the experiment.

Various technologies to continuously separate microparticles have been developed using forces like acoustic, electric, magnetic, optical, or inertia forces.[1] Among them, acoustic methods, which can achieve high efficiency by increasing energy input, [2] are widely applied in biological,[3),4)] biomedical,[5),6),7)] chemical,[8)] and environmental fields.[9),10)] Acoustic methods mainly utilize microparticle enrichment by acoustic focusing based on acoustic radiation force (ARF), which moves microparticles with positive acoustic contrast factors like cells and plastic particles to nodes of acoustic standing waves.[11)]

A conventional microparticle enrichment system based on an acoustic method employs horizontal focusing with one-dimensional (1D) standing waves.[12)] In general, the system generates the transverse half-wavelength standing wave in the microchannel to form nodes on the vertical centerline, on which microparticles are focused. By adjusting the flow rate and the split ratio at a trifurcated branch, the focused microparticles flow only into the middle branch, from which the enriched microparticles are recovered. Ideally, the enrichment factor can be set to over 50 which should be dependent on the ratio of the microchannel width to the focusing width of the microparticles;[13)] however, the practical enrichment factor is generally limited to a value from 3 to 10.[9),14),15)] The limitation is mainly due to instability of acoustic focusing at the branch, which is due in turn to disorder of the acoustic pressure field derived from the shape change from the straight channel to a trifurcated branch.[16)] In particular, the instability seriously affects microparticles slowly flowing around the top and bottom walls at the branch according to parabolic profiles of the pressure-driven flow. To inhibit influence by this instability, two-dimensional (2D) focusing on a single spot at the center i.e. simultaneous horizontal and vertical focusing have been reported. The 2D focusing improved the enrichment factor limit and achieved 67-fold enrichment for 5 μm diameter polystyrene particles.[13)]

The simplest way to realize 2D focusing is to use a square channel, which ensures that horizontal and vertical resonant frequencies are coincident and 2D focusing is achieved without any additional devices or device design modifications.[17),18),19)] 2D focusing in a circular channel has been reported as well[20)]. While 2D focusing in a rectangular channel is more common, it needs two vibration systems at different frequencies.[13),21),22)] One frequency is chosen for horizontal focusing, and half of the wavelength corresponds to the microchannel width. The other is frequency for vertical focusing, and half of the wavelength corresponds to the microchannel depth. The two vibration systems need two each of the piezoelectric transducers (PZTs), signal generators, and high-frequency power amplifiers, which makes each whole system complicated and results in costs that are almost twice those of a single vibration system for 1D focusing. Furthermore, two PZTs with different resonant frequencies corresponding to the width and the depth must be attached to the microfluidic device, which sometimes restricts the microfluidic device design and also might affect the acoustic pressure field.

This letter reports 2D focusing of microparticles in a rectangular channel with a single PZT, which is excited at the dual frequencies for horizontal and vertical focusing. Specifically, horizontal focusing is performed efficiently at the resonant frequency of the PZT while inefficient vertical focusing at the non-resonant frequency is compensated for by increasing the power input to the PZT. These signals are first combined at an appropriate ratio and amplified to excite the PZT. Therefore, the 2D focusing is realized by the same vibration system as 1D focusing and differs only in the two excitation signals. First, horizontal and vertical focusing are confirmed separately by exciting the PZT at each frequency. Then, 2D focusing is demonstrated by exciting the PZT at the dual frequencies simultaneously. Finally, to explore the mechanism of the 2D focusing, numerical simulations of the experimental device are performed.

The experimental setup for the acoustic focusing is shown in Fig. 5a. The microfluidic chip ($70 \times 20 \times 2.1$ mm$^3$) was produced by thermally bonding three 0.7 mm thick borosilicate glass plates (Tempax Float, Schott). The rectangular microchannel (1.42 mm wide; 0.7 mm deep) was obtained by machining a through slot in the trifurcated shape on the middle plate (Fig. 5b). A $40 \times 34.5 \times 4.2$ mm$^3$ PZT (C-213, Fuji Ceramics Corp.) whose resonant frequency of the thickness mode was 500 kHz was glued to the microfluidic chip with epoxy adhesive. The alignment pins aligned the microfluidic chip precisely with the microfluidic connectors. Sine waves at required frequencies generated by a signal generator with two output channels were amplified with a high-frequency power amplifier (HSA4011, NF Corp.) that actuated the PZT. For the 2D focusing, the signals at different frequencies generated by the signal generator were summed and amplified at the amplifier. A microparticle suspension (104 particles mL$^{-1}$) was prepared by suspending green fluorescent polyethylene microparticles (50 $\mu$m diameter, 1.025 g mL$^{-1}$ density; Cospheric) in distilled water supplemented with Tween 20 at 0.2 wt%. Finally, Nile red solution was added at 1 ppm to allow the region of the microchannel to be distinguished by fluorescent imaging. The microfluidic chip was placed vertically to prevent the microparticles from sedimentation by gravity. The suspension was introduced into the microfluidic chip (flow rate, 300 $\mu$L min$^{-1}$) by aspirating from all the outlets with syringe pumps. The alignment of microparticles in the microchannel was observed with green and red fluorescent imaging with a macro confocal microscope (AZ-C2+, Nikon).

The horizontal and vertical excitation frequencies depend on the geometry of the microchannel. To generate a single node standing wave in the horizontal direction, half of the wavelength must be close to the microchannel width. By using 1480 m/s (the speed of sound in water at room temperature), the excitation frequency was expected to be around 521 kHz. Similarly, the excitation frequency for the vertical direction should be around 1060 kHz. The resonant characteristics of the PZT which was fully set up and whose microchannel was filled with distilled water were evaluated by measuring impedance with an impedance analyzer (IM3570, Hioki). As shown in Fig. 6, some admittance peaks were found around 500 kHz, at which the phase approached zero. If these peaks are applicable to horizontal focusing, the focusing will be performed at low amplitude efficiently. On the other hand, no admittance peak over 800 kHz was found and the phase was almost constant at -85 °, which means vertical focusing will be inefficient and need a larger power input than focusing at the admittance peaks around 500 kHz.

Next, 1D focusing in both directions was performed and the cross-sectional images were constructed using confocal microscopy. The excitation frequencies were sought around the frequencies of 500 and 800 kHz by observing microparticle alignment in front of the trifurcated branch. Consequently, the excitation frequencies for horizontal and vertical focusing were decided as 515 kHz and 1051 kHz, respectively, and fixed throughout the study. For horizontal focusing, the PZT was excited at an amplitude of 5 or 10 V. As shown by images in the leftmost column in Fig. 7, the microparticles were well aligned on the vertical line at the center even at 5 V (middle row image) which was the lowest amplitude used. For vertical focusing, the applied amplitude was 5, 10, 15, 20, 25 or 30 V. As expected from the impedance measurements, vertical focusing required a higher amplitude than horizontal focusing. The vertical focusing at 10 V was not able to align the microparticles into as narrow a region as horizontal focusing at 5 V. Therefore, amplitudes up to 30 V were examined for vertical focusing. It should be noted that vertical focusing at high amplitude focused microparticles not on a line, but into two spots. This would be because vibration at the frequency for vertical focusing could form not only a horizontal single pressure node line but also two vertical pressure node lines. Since the aspect ratio (width to depth) of the rectangular channel used was almost two, the excitation also would work as the second harmonic frequency of the horizontal focusing, which caused two-spot focusing derived from the two kinds of node lines.

Then, the proposed 2D focusing was experimentally confirmed, in that the single PZT was excited at dual excitation frequencies simultaneously. The signals at two different frequencies were summed and amplified by the amplifier, which was applied to the PZT. The cross-sectional images of 2D focusing by various amplitude combinations are shown in Fig. 7. In the experiment, 2D focusing was clearly achieved under the conditions: vertical focusing at 20, 25 or 30 V with horizontal focusing at 10 V. When the amplitude for vertical focusing was less than 15 V, horizontal focusing was dominant and vertical focusing had less effect on the microparticles. On the other hand, too strong vertical focusing compared to horizontal focusing worked to split the microparticles into two spots as seen for the images obtained for vertical focusing at 25 or 30 V and horizontal focusing at 5 V. Horizontal focusing at 10 V was able to focus into a single spot for all amplitudes of vertical focusing. The results showed that 2D focusing in a rectangular microchannel by a single PZT is possible and the balance between the forces by horizontal and vertical focusing must be adjusted.

To investigate the mechanism of 2D focusing by dual-frequency excitation, numerical simulations in the frequency domain were performed using COMSOL Multiphysics (ver. 5.6, COMSOL Inc.). Due to the limitation of computer resources, the cross-sectional 2D model was used (Fig. 8a). The model consisted of four domains, fluid, glass as the microfluidic chip, epoxy as glue, and PZT. The center of the PZT was shifted from the center of the microfluidic chip by 1.25 mm just as it was in the experimental setup. In the fluid domain, the Helmholtz equation was solved using the "Pressure Acoustics Module" and the viscous boundary layer was ignored. Since the microparticles used in the present study are large enough to ignore the acoustic streaming force, only the ARF was considered. In all the solid domains of glass, epoxy, and PZT, the Cauchy equation of motion was solved using the "Solid Mechanics Module" and the piezoelectricity in the PZT domain was considered as the stress-charge form by coupling with the "Electrostatics Module". In addition, the epoxy adhesive layer was expressed as the "Thin Elastic Layer"; its thickness was measured with a micrometer. The boundary conditions between fluid and glass domains were defined by setting the "Acoustic-Structure Boundary." The parameters for material properties including damping were obtained from the literature.[23),24)] The same as in the experiment, the amplitude to excite the PZT was applied between the top and bottom boundaries. The amplitudes for horizontal and vertical focusing were 10 V and 30 V, respectively.

The excitation frequencies for horizontal and vertical focusing were sought by referring to the acoustic energy density $E_{ac}$ that was calculated by
(Equation 1)

$$E_{ac} = \frac{1}{2\rho_f c_f{}^2} \langle p^2 \rangle + \frac{1}{2} \rho_f \langle v^2 \rangle \qquad (1)$$

Where $\langle . \rangle$ represents a time average, $\rho_f$ is the fluid density, $c_f$ is the speed of sound in the fluid, $p$ is the acoustic pressure, and $v$ is the acoustic velocity. The averaged values of $E_{ac}$ over the fluid domain are plotted around both frequencies in Fig. 8b. In the region around 515 kHz, the resonant frequency was shifted slightly lower than the experimental result; a significantly large peak was found at 499 kHz, which was adopted for horizontal focusing. In the region over 1000 kHz for vertical focusing, a large peak at 1020 kHz and some small peaks were found. At the large peak, however, no horizontal pressure node line but two vertical pressure node lines which corresponded to the second harmonic frequency of horizontal frequency were established. Thus, the frequency for vertical focusing was sought in the higher region and 1083 kHz was chosen for vertical focusing based on distributions of acoustic pressure and ARF.

Distributions of acoustic pressure and ARF in the fluid domain at each excitation frequency are shown in Fig. 8c. The F of the ARFs acting on polyethylene particles resulting from the acoustic pressure field were calculated using Equation (2).[24)] (Equation 2)

$$\mathbf{F} = -\nabla \left[ V \left( \frac{f_0}{2} \frac{1}{\rho_f c_f{}^2} \langle p^2 \rangle + \frac{3f_1}{4} \rho_f \langle v^2 \rangle \right) \right] \qquad (2)$$

Where $f_0 = 1 - \rho_f c_f{}^2 / \rho_p c_p{}^2$ is the monopole acoustic scattering coefficient for particles and $f_1 = 2(\rho_p - \rho_f)/(2\rho_p + \rho_f)$ is the dipole acoustic scattering coefficient for particles, V is the particle volume, $\rho_f$ is the particle density and $c_p$ is the speed of sound of the particle. In the simulation for horizontal focusing, a pressure node line was formed almost vertically around the center. The ARF was horizontal and pointed to the vertical centerline everywhere. The maximum value of ARF was 94 pN. In the simulation for vertical focusing, a pressure node line was formed horizontally, however, overall it was curved. Due to this behavior, the distribution of ARF was partially weak, especially around the center regions below the center and near the top wall. Despite the applied amplitude being three times as high as that for horizontal focusing, the maximum ARF for vertical focusing was 46 pN, which was about half the value for horizontal focusing.

To reproduce 2D focusing, the ARF distribution excited at dual frequencies was estimated according to the principle of superposition, e.g. the ARF distributions separately calculated for horizontal and vertical focusing were summed (Fig. 8d). As expected, the ARF pointed to the center of the microchannel almost everywhere, which meant microparticles basically were focused two-dimensionally into a spot at the center. It should be noted that the ARF in the region close to the center of the top wall pointed horizontally to the center, but vertically to the top. The microparticles in this region finally attached to the center of the top wall.

The 2D focusing was confirmed by particle tracing simulation using the "Particle Tracing Module" of COMSOL Multiphysics. Initially, 14 × 7 particles were placed on the grid points at intervals of 0.1 mm with zero velocity. For each particle, the ARF and the drag force with inertia were solved in the Newtonian formulation. Fig. 8e and Movie S1 in supplemental data show the particle position and trajectories for 10 s. Globally, the microparticles initially moved in the horizontal direction and then they moved vertically to the center. The microparticle movement could be explained by the horizontal force being dominant. In the first 5 s, microparticles focused on the vertical centerline, and then most microparticles focused in a spot at the center. As predicted by Fig. 8d, the microparticles around the center of the top wall did not focus at the center but went to the top wall. Six microparticles attached to the wall, which was 6.1 % of the total microparticles. Considering the parabolic velocity distribution of the Poiseuille flow, the microparticles attached to the wall in the simulation were likely to be negligible. In fact, no microparticles were observed to be attaching to the top wall.

In the experiment for 2D focusing, almost all the microparticles were collected from the center outlet. The mean flow velocity was 5 mm/s under the experimental conditions. By assuming the Hagen-Poiseuille law, the maximum flow velocity of 10 mm/s was obtained at the centerline of the microchannel. A microparticle introduced at the centerline of the inlet could reach the trifurcated branch in 3.5 s. Since almost all the microparticles were focused in 3 s, they would be collected from the center microchannel when the flow was split equally into three outlets. The simulation results agreed with the experimental results.

This work demonstrated 2D focusing in a rectangular microchannel when using a single PZT. The PZT was excited at dual frequencies and focused microparticles into a single spot at the microchannel center. While conventional 2D focusing requires two vibration systems including PZTs, signal generators, and high-frequency power amplifiers, the proposed method was able to achieve 2D focusing with a single vibration system that includes a signal generator with two output channels. In addition, the method increased the degrees of freedom in the device design owing to the simple configuration with a single PZT. Numerical simulations showed that 2D focusing was possible by superposition of two different frequency excitations. The method is expected to be widely applicable for stable particle focusing with a higher enrichment factor that of conventional 2D focusing with two vibration systems.

(REFERENCES)

1) A. Lenshof and T. Laurell, Chem Soc Rev 39, 1203 (2010).
2) P. Sajeesh and A.K. Sen, Microfluid Nanofluid 17, 1 (2014).
3) H. Böhm, L.G. Briarty, K.C. Lowe, J.B. Power, E. Benes, and M.R. Davey, Biotech Bioeng 82, 74 (2003).
4) B. Hammarström, M. Vassalli, and P. Glynne-Jones, J Appl Phycol 32, 339 (2020).
5) F. Trampler, S.A. Sonderhoff, P.W.S. Pui, D.G. Kilburn, and J.M. Piret, Nat Biotechnol 12, 281 (1994).
6) F. Petersson, A. Nilsson, C. Holm, H. Jönsson, and T. Laurell, Analyst 129, 938 (2004).
7) P. Augustsson, C. Magnusson, M. Nordin, H. Lilja, and T. Laurell, Anal Chem 84, 7954 (2012).
8) I. Leibacher, P. Reichert, and J. Dual, Lab Chip 15, 2896 (2015).
9) Y. Akiyama, T. Egawa, K. Koyano, and H. Moriwaki, Sens Actuators B: Chem 127328 (2019).
10) L.N. Perera and M.E. Piyasena, Sep Purif Technol 288, 120649 (2022).
11) H. Bruus, Lab Chip 12, 1014 (2012).
12) T. Laurell, F. Petersson, and A. Nilsson, Chem. Soc. Rev. 36, 492 (2007).
13) M. Nordin and T. Laurell, Lab Chip 12, 4610 (2012).
14) A. Nilsson, F. Petersson, H. Jönsson, and T. Laurell, Lab Chip 4, 131 (2004).
15) O. Jakobsson, S.S. Oh, M. Antfolk, M. Eisenstein, T. Laurell, and H.T. Soh, Anal Chem 87, 8497 (2015).
16) P. Augustsson, J. Persson, S. Ekstrom, M. Ohlin, and T. Laurell, Lab Chip 9, 810 (2009).
17) M. Antfolk, P.B. Muller, P. Augustsson, H. Bruus, and T. Laurell, Lab Chip 14, 2791 (2014).
18) C. Perfetti and C.S. Iorio, Acoust Sci Technol 37, 221 (2016).
19) J. Lei, F. Cheng, K. Li, and Z. Guo, Appl Phys Lett 116, 033104 (2020).
20) G. Goddard and G. Kaduchak, J Acoust Soc Am 117, 8 (2005).
21) O. Jakobsson, C. Grenvall, M. Nordin, M. Evander, and T. Laurell, Lab Chip 14, 1943 (2014).
22) C. Grenvall, C. Antfolk, C.Z. Bisgaard, and T. Laurell, Lab Chip 14, 4629 (2014).
23) J.S. Bach and H. Bruus, Phys Rev Lett 124, 214501 (2020).
24) A. Tahmasebipour, L. Friedrich, M. Begley, H. Bruus, and C. Meinhart, J Acoust Soc Am 148, 359 (2020).

The preferred embodiments of the present invention have been described, but the present invention is not limited to the above embodiments, and many alternations could be made hereto without departing from the spirit of the invention.

EXPLANATION OF REFERENCE SYMBOLS

a       LONG SIDE
b       SHORT SIDE
S1      HORIZONTAL STANDING WAVE HAVING HALF WAVELENGTH
S2      VERTICAL STANDING WAVE HAVING HALF WAVELENGTH
10      RECTANGULAR CHANNEL
20      ULTRASONEC WAVE GENERATOR
21      SIGNAL GENERATOR
22      HIGH-FREQUENCY POWER AMPLIFIER
23      PIEZOELECTRIC VIBRATION ELEMENT
30      OPTICAL MEASURING DEVICE
40      TRIFURCATED CHANNEL
41      ONE BRANCHED CHANNEL
42      THE OTHER BRANCHED CHANNEL
43      CENTER BRANCHED CHANNEL

**Claims**

1.  A particle two-dimensional acoustic focusing device being configured so as to focus particles contained in liquid flowing in a channel to the center part of the cross-section of the channel by using ultrasonic waves and comprising:

    a rectangular channel having a substantially rectangular cross-sectional shape when broken orthogonally to the extension direction of the channel; and
    a single ultrasonic wave generator that simultaneously irradiates the interior of the rectangular channel with a first ultrasonic wave and a second ultrasonic wave in a composite state, the first ultrasonic wave being generated so that the length of a long side of the rectangle of the rectangular channel is substantially equivalent to the length of a half wavelength, the second ultrasonic wave being generated so that the length of a short side of the rectangle of the rectangular channel is substantially equivalent to the length of the half wavelength.

2.  The particle two-dimensional acoustic focusing device according to claim 1, wherein the ultrasonic wave generator includes signal adjusting means capable of adjusting composite rate and magnitudes of two signals having different frequencies for generating the first ultrasonic wave and the second ultrasonic wave.

3.  The particle two-dimensional acoustic focusing device according to claim 2, wherein the ultrasonic wave generator comprises: a signal generator for generating the two signals having different frequencies; and a piezoelectric element for generating the ultrasonic waves by receiving the signals from the signal generator.

4.  The particle two-dimensional acoustic focusing device according to claim 3, wherein at least a part of the rectangular channel, which is irradiated with the first ultrasonic wave and the second ultrasonic wave, is set in a state of standing such that the liquid flows in the vertical direction.

5.  The particle two-dimensional acoustic focusing device according to any one of claims 1-4, wherein an optical measuring device, whose measuring capability is affected by a depth of field, is provided at a position facing the rectangular channel.

6.  An acoustic concentration device comprising the particle two-dimensional acoustic focusing device according to any one of claims 1-4,
    wherein the channel is a trifurcated channel, which is constituted by one branched channel, the other branched channel, and a center branched channel for flowing particles focused to the center part of the rectangular channel by the particle two-dimensional acoustic focusing device, is formed on a downstream side of the rectangular channel.

7.  The acoustic concentration device according to claim 6, wherein the trifurcated channel is formed by dividing the channel into three in a length direction of a long side of the rectangular channel.

8.  The acoustic concentration device according to claim 6, wherein a plurality of the acoustic concentration devices using the particle two-dimensional acoustic focusing devices are serially connected in a flowing direction of the liquid containing the particles.

9.  The acoustic concentration device according to claim 6, wherein a plurality of the acoustic concentration devices using the particle two-dimensional acoustic focusing devices are parallelly connected in a flowing direction of the liquid containing the particles.

[FIG. 1]

[FIG. 2]

[FIG. 3]

[FIG. 4]

[FIG. 5]

[FIG. 6]

[FIG. 7]

[FIG. 8]

[FIG. 9]

## INTERNATIONAL SEARCH REPORT

| International application No. |
|---|
| **PCT/JP2023/019243** |

### A. CLASSIFICATION OF SUBJECT MATTER

***B01D 43/00***(2006.01)i; ***B01J 19/10***(2006.01)i; ***G01N 37/00***(2006.01)i
FI: B01D43/00 Z; B01J19/10; G01N37/00 101

According to International Patent Classification (IPC) or to both national classification and IPC

### B. FIELDS SEARCHED

Minimum documentation searched (classification system followed by classification symbols)

B01D43/00, B01J19/10, C12M1/00-3/10, G01N1/00-37/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-515669 A (FLODESIGN SONICS INC.) 15 June 2017 (2017-06-15) | 1-9 |
| A | JP 2020-502539 A (ACOUSORT AB) 23 January 2020 (2020-01-23) | 1-9 |
| A | JP 2014-528089 A (ACOUSORT AB) 23 October 2014 (2014-10-23) | 1-9 |
| A | JP 2011-508220 A (LOS ALAMOS NATIONAL SECURITY, LLC) 10 March 2011 (2011-03-10) | 1-9 |
| A | JP 9-122480 A (HITACHI, LTD.) 13 May 1997 (1997-05-13) | 1-9 |
| A | US 2009/0029870 A1 (WARD, Michael D.) 29 January 2009 (2009-01-29) | 1-9 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019243**

| Patent document cited in search report | | | Publication date (day/month/year) | Patent family member(s) | | | Publication date (day/month/year) |
|---|---|---|---|---|---|---|---|
| JP | 2017-515669 | A | 15 June 2017 | AU | 2018261949 | A1 | |
| | | | | CA | 2948355 | A1 | |
| | | | | CN | 106470748 | A | |
| | | | | EP | 3140387 | A1 | |
| | | | | KR | 10-2017-0003644 | A | |
| | | | | SG | 11202001457Q | A | |
| | | | | US | 2015/0321129 | A1 | |
| | | | | WO | 2015/172095 | A1 | |
| JP | 2020-502539 | A | 23 January 2020 | AU | 2017339580 | A1 | |
| | | | | CA | 3038003 | A1 | |
| | | | | CN | 109803764 | A | |
| | | | | EP | 3523026 | A1 | |
| | | | | US | 2021/0283607 | A1 | |
| | | | | WO | 2018/065626 | A1 | |
| JP | 2014-528089 | A | 23 October 2014 | EP | 2761291 | A1 | |
| | | | | KR | 10-2014-0076590 | A | |
| | | | | US | 2014/0231315 | A1 | |
| | | | | WO | 2013/048323 | A1 | |
| JP | 2011-508220 | A | 10 March 2011 | AU | 2008343033 | A1 | |
| | | | | BR | PI0821646 | A2 | |
| | | | | CA | 2709765 | A1 | |
| | | | | CN | 102089635 | A | |
| | | | | EA | 201070765 | A1 | |
| | | | | EP | 2232212 | A2 | |
| | | | | IL | 206331 | A | |
| | | | | KR | 10-2010-0120122 | A | |
| | | | | US | 2009/0158823 | A1 | |
| | | | | US | 2009/0162887 | A1 | |
| | | | | WO | 2009/086043 | A2 | |
| | | | | ZA | 201004306 | B | |
| JP | 9-122480 | A | 13 May 1997 | DE | 69628389 | T2 | |
| | | | | EP | 773055 | A2 | |
| | | | | US | 5902489 | A | |
| US | 2009/0029870 | A1 | 29 January 2009 | AT | 538377 | T | |
| | | | | EP | 2156178 | A1 | |
| | | | | WO | 2008/122051 | A1 | |

Form PCT/ISA/210 (patent family annex) (January 2015)

# EP 4 534 172 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6241977 A

**Non-patent literature cited in the description**

- **KENJI YASUDA**. Bioparticle handling technology using ultrasonic wave irradiation. *Applied Physics*, 1998, vol. 67 (3), 323-326
- **YOSHITAKE AKIYAMA** ; **TAKETOSHI EGAWA** ; **KIYOSHI KOYAMA** ; **HIROSHI MORIWAKI**. Acoustic focusing of microplastics in microchannels: A promising continuous collection approach. *Sensors and Actuators B: Chemical online version*, 10 November 2019
- **A. LENSHOF** ; **T. LAURELL**. *Chem Soc Rev*, 2010, vol. 39, 1203
- **P. SAJEESH** ; **A.K. SEN**. *Microfluid Nanofluid*, 2014, vol. 17, 1
- **H. BÖHM** ; **L.G. BRIARTY** ; **K.C. LOWE** ; **J.B. POWER** ; **E. BENES** ; **M.R. DAVEY**. *Biotech Bioeng*, 2003, vol. 82, 74
- **B. HAMMARSTRÖM** ; **M. VASSALLI** ; **P. GLYNNE-JONES**. *J Appl Phycol*, 2020, vol. 32, 339
- **F. TRAMPLER** ; **S.A. SONDERHOFF** ; **P.W.S. PUI** ; **D.G. KILBURN** ; **J.M. PIRET**. *Nat Biotechnol*, 1994, vol. 12, 281
- **F. PETERSSON** ; **A. NILSSON** ; **C. HOLM** ; **H. JÖNSSON** ; **T. LAURELL**. *Analyst*, 2004, vol. 129, 938
- **P. AUGUSTSSON** ; **C. MAGNUSSON** ; **M. NORDIN** ; **H. LILJA** ; **T. LAURELL**. *Anal Chem*, 2012, vol. 84, 7954
- **I. LEIBACHER** ; **P. REICHERT** ; **J. DUAL**. *Lab Chip*, 2015, vol. 15, 2896
- **Y. AKIYAMA** ; **T. EGAWA** ; **K. KOYANO** ; **H. MORIWAKI**. *Sens Actuators B: Chem*, 2019, 127328
- **L.N. PERERA** ; **M.E. PIYASENA**. *Sep Purif Technol*, 2022, vol. 288, 120649
- **H. BRUUS**. *Lab Chip*, 2012, vol. 12, 1014
- **T. LAURELL** ; **F. PETERSSON** ; **A. NILSSON**. *Chem. Soc. Rev.*, 2007, vol. 36, 492
- **M. NORDIN** ; **T. LAURELL**. *Lab Chip*, 2012, vol. 12, 4610
- **A. NILSSON** ; **F. PETERSSON** ; **H. JÖNSSON** ; **T. LAURELL**. *Lab Chip*, 2004, vol. 4, 131
- **O. JAKOBSSON** ; **S.S. OH** ; **M. ANTFOLK** ; **M. EISENSTEIN** ; **T. LAURELL** ; **H.T. SOH**. *Anal Chem*, 2015, vol. 87, 8497
- **P. AUGUSTSSON** ; **J. PERSSON** ; **S. EKSTROM** ; **M. OHLIN** ; **T. LAURELL**. *Lab Chip*, 2009, vol. 9, 810
- **M. ANTFOLK** ; **P.B. MULLER** ; **P. AUGUSTSSON** ; **H. BRUUS** ; **T. LAURELL**. *Lab Chip*, 2014, vol. 14, 2791
- **C. PERFETTI** ; **C.S. IORIO**. *Acoust Sci Technol*, 2016, vol. 37, 221
- **J. LEI** ; **F. CHENG** ; **K. LI** ; **Z. GUO**. *Appl Phys Lett*, 2020, vol. 116, 033104
- **G. GODDARD** ; **G. KADUCHAK**. *J Acoust Soc Am*, 2005, vol. 117, 8
- **O. JAKOBSSON** ; **C. GRENVALL** ; **M. NORDIN** ; **M. EVANDER** ; **T. LAURELL**. *Lab Chip*, 2014, vol. 14, 1943
- **C. GRENVALL** ; **C. ANTFOLK** ; **C.Z. BISGAARD** ; **T. LAURELL**. *Lab Chip*, 2014, vol. 14, 4629
- **J.S. BACH** ; **H. BRUUS**. *Phys Rev Lett*, 2020, vol. 124, 214501
- **A. TAHMASEBIPOUR** ; **L. FRIEDRICH** ; **M. BEGLEY** ; **H. BRUUS** ; **C. MEINHART**. *J Acoust Soc Am*, 2020, vol. 148, 359